(19) Europäisches Patentamt / European Patent Office / Office européen des brevets

(11) **EP 3 557 672 A1**

(12) **EUROPEAN PATENT APPLICATION**
published in accordance with Art. 153(4) EPC

(43) Date of publication:
**23.10.2019 Bulletin 2019/43**

(51) Int Cl.:
*H01M 8/18* (2006.01)    *H01M 8/04746* (2016.01)

(21) Application number: **17884603.6**

(22) Date of filing: **19.12.2017**

(86) International application number:
**PCT/JP2017/045442**

(87) International publication number:
**WO 2018/117070 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **19.12.2016 JP 2016245563**

(71) Applicant: **Showa Denko K.K.**
**Tokyo 105-8518 (JP)**

(72) Inventor: **SUZUKI, Masahiro**
**Tokyo 105-8518 (JP)**

(74) Representative: **Strehl Schübel-Hopf & Partner**
**Maximilianstrasse 54**
**80538 München (DE)**

(54) **METHOD FOR OPERATING REDOX FLOW CELL**

(57) The present invention discloses a method of operating a redox flow battery which has a positive electrode, a negative electrode and a membrane, and performs charge and discharge by supplying a positive electrode electrolyte to the positive electrode and supplying a negative electrode electrolyte to the negative electrode, the method including a step of supplying the electrolytes such that one or both of a flow rate of the positive electrode electrolyte and a flow rate of the negative electrode electrolyte is changed in a cycle of 1/60 to 10 seconds.

EP 3 557 672 A1

**Description**

TECHNICAL FIELD

The present invention relates to a method for operating a redox flow battery.
Priority is claimed on Japanese Patent Application No. 2016-245563, filed on December 19, 2016, the content of which is incorporated herein by reference.

BACKGROUND ART

It is known that, in a case where charge and discharge of a redox flow battery are repeatedly performed, cell efficiency is gradually reduced.
As a countermeasure therefor, for example, Patent Document 1 discloses a method in which a cleaning liquid (distilled water, a sulfuric acid, or an electrolyte) is forwarded into a battery cell, and thus a foreign substance such as dust clogging an electrode portion is removed.

Citation List

Patent Documents

Patent Document 1: Japanese Unexamined Patent Application, First Publication No. H10-308232

DISCLOSURE OF INVENTION

Technical Problem

However, as disclosed in Patent document 1, a redox flow battery cannot be operated during cleaning in this method. Thus, in a case where frequent cleaning is performed, this is not efficient.
With respect to foreign substances which causes clogging or the like, there is a method that a foreign substance is removed from an electrolyte by passing the electrolyte through a filter before the electrolyte is supplied to an electrode. However, when a pore size of the filter is reduced so that even a very small foreign substances are removed, pressure loss increases, and an unnecessary power loss is caused in connection with operation of pump or the like. Therefore, the pore size of the filter is usually set to a size which is slightly smaller than a size which can pass through pores of a positive electrode and a negative electrode.
Even if filtration is performed using such a filter, if aggregates are formed from foreign substances in the positive and negative electrodes or formed before the electrolyte arrives at positive and negative electrodes, clogging may be caused due to the foreign substance. Here, such aggregates tend to be easily broken under a high flow speed. However, if an electrolyte is supplied at a large flow rate which exceeds a flow rate required for the charge and discharge of a redox flow battery, an unnecessary power loss is caused in connection with operation of pump or the like.
The present invention has been made in light of the problems, and an object thereof is to provide a method for operating a redox flow battery, capable of operating the redox flow battery for a long period of time, without causing an unnecessary power loss, by increasing a cleaning interval.

Solution to Problem

The present invention provides the following means in order to solve the problems.
In other words, a first aspect of the present invention is the following method for operating a redox flow battery.

[1] A method of operating a redox flow battery which has a positive electrode, a negative electrode and a membrane, and performs charge and discharge by supplying a positive electrode electrolyte to the positive electrode and supplying a negative electrode electrolyte to the negative electrode, the method including:

a step of supplying the electrolytes such that one or both of a flow rate of the positive electrode electrolyte and a flow rate of the negative electrode electrolyte is changed in a cycle of 1/60 to 10 seconds.
The method for operating a redox flow battery of the first aspect preferably has the following features.

[2] The method of operating a redox flow battery according to the above [1],
in which an amplitude of the change of the flow rate is equal to or more than 10% of an average flow rate of the supplied electrolyte.

[3] The method of operating a redox flow battery according to the above [1] or [2],
in which both of the flow rate of the positive electrode electrolyte and the flow rate of the negative electrode electrolyte are changed.

[4] The method of operating a redox flow battery according to the above [3],
in which the change of the flow rates of the two electrolytes are synchronized with each other.

Advantageous Effects of Invention

According to the present invention, it is possible to operate a redox flow battery for a long period of time.

BRIEF DESCRIPTION OF THE DRAWINGS

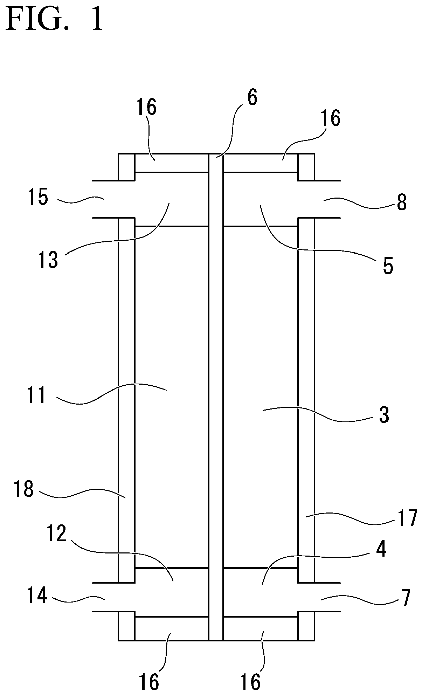

FIG. 1 is a schematic diagram showing a sectional view of a preferable aspect (single cell) of a redox flow battery available in the present invention.

BEST MODE FOR CARRYING OUT THE INVENTION

Hereinafter, a method for operating a redox flow battery will be described in detail by use of a preferable exemplary embodiment, but the present invention is not limited thereto. Appropriate modifications may occur within the scope of being capable of achieving the effect of the present invention. Additions, omissions, replacements, and other changes may occur as necessary within the scope without departing from the spirit of the present invention.

Generally, a redox flow battery has a positive electrode, a negative electrode, and a membrane, and is charged and discharged by supplying a positive electrode electrolyte to the positive electrode and supplying a negative electrode electrolyte to the negative electrode. A carbon material or the like having pores such as a carbon felt is preferably used as an electrode for the positive electrode and the negative electrode. As the membrane, an ion exchange membrane such as Nafion (registered trademark) is preferably used. A sulfuric acid solution containing vanadium ions is frequently used as the positive electrode and negative electrode electrolytes.

In operating the redox flow battery, in the present embodiment, the electrolytes are supplied such that at least a flow rate of the positive electrode or a flow rate of the negative electrode is changed in a cycle of 1/60 to 10 seconds. In a case where the cycle is in the above-described range, it becomes easier to remove a foreign substance such as dust clogging an electrode portion, during operation of a redox flow battery. In a case where the cycle of the flow rate change is too short, a flow rate change is likely to be alleviated due to elasticity of a pipe or the like. In a case where the cycle is too long, it is hard to remove foreign substances such as dust.

A cycle of changing the flow rate may be selected within the range depending on situations. For example, the flow rate may be changed in a cycle of 1/10 seconds to 9 seconds. In other situations, the flow rate may be changed in a cycle of 2 to 8 seconds, and the flow rate may be changed in a cycle of 1/60 to 60/60 second.

More specifically, for example, a step of changing a flow rate may include a sub-step A of supplying an electrolyte and a sub-step B of not supplying an electrolyte (stop of supplying). The sub-step A may be performed in a period within a range of 1/60 to 10 seconds, the sub-step B may be performed in a period within a range of 1/60 to 10 seconds, and the sub-step A and the sub-step B may be alternately performed a plurality of times. The cycle may be the cycle described in the above examples. Each condition for each step in a combination of the sub-step A and the sub-step B may be changed once, or twice or more in the middle. Alternatively, there may be two or more types of combinations of the sub-step A and the sub-step B, the combinations may be combined with each other as necessary, so as to be performed, for example, alternately, sequentially a plurality of times, or at random.

Regarding periods of the sub-step A and the sub-step B, the sub-step A and the sub-step B may have the periods of an identical length, or the sub-step A may be longer or shorter than the sub-step B.

Furthermore, as another specific example, a step of changing a flow rate may include a sub-step C of supplying an electrolyte at a preferably selected flow rate and a sub-step C of supplying an electrolyte at a flow rate lower than the flow rate in the sub-step C. The sub-step C may be performed in a period within a range of 1/60 to 10 seconds, the sub-step D may be performed in a period within a range of 1/60 to 10 seconds, and the sub-step D and the sub-step D may be alternately performed a plurality of times. The cycle may be the cycle described in the above examples. A condition in the combination of the sub-step C and the sub-step D may be changed once, or twice or more in the middle. Alternatively, there may be two or more types of combinations of the sub-step C and the sub-step D, the combinations may be combined with each other as necessary, so as to be performed, for example, alternately, sequentially a plurality of times, or at random.

Regarding periods of the sub-step C and the sub-step D, the sub-step C and the sub-step D may have the periods of an identical length, or the sub-step C may be longer or shorter than the sub-step D. A combination of the sub-step A and the sub-step B may be combined with a combination of the sub-step C and the sub-step D.

The flow rate change described above may be realized according to any method or by any device. For example, the flow rate change may be realized, for example, by moving a plunger pump intermittently or under different conditions, or may be realized by causing a flexible pipe to vibrate with a vibrator or the like consecutively or intermittently or under different conditions. Particularly, the latter method using a vibrator is a method in which 1/60 second cycle or 1/50 second cycle corresponding to a commercial power supply frequency is easily obtained.

As the amplitude of the change becomes larger as long as a mechanical strength of the redox flow battery system to be used is allowed, the local flow rate change becomes large in the electrodes, and it becomes easier to remove a foreign substance such as the dust or the air bubble. The amplitude is preferably equal to or more than 10% of an average flow rate of a supplied electrolyte, more preferably equal to or more than 20%, and most preferably equal to or more than 50%. The amplitude is a difference between the maximum value and the minimum value of a changing flow rate. The flow rate is the volume of electrolytes which passes per unit time, and the average flow rate indicates the average flow rate in the cycle.

When the electrolytes are supplied in such a way, it is preferable that the supply is applied to both of the positive electrode electrolytes and negative electrode electrolytes, since the redox flow battery can be operated for a longer period of time.

Furthermore, a case where the flow rate change is synchronized between both of the negative electrode and the positive electrode is preferable since a pressure difference between both sides of the membrane is thereby reduced so that damage to the membrane is limited.

The method for operating a redox flow battery according to the present invention includes a charge step and a discharge step. The step of supplying an electrolyte while changing a flow rate may be performed in both of the charge step and the discharge step, or may be performed in only one thereof.

Examples

Hereinafter, the present invention will be described in more detail on the basis of Examples, but the present invention is not limited to the Examples.

[Comparative Example 1]

(Cell configuration)

A cell of the redox flow battery having the configuration shown in FIG. 1 was used. An inlet nozzle 7 of a positive electrode chamber 3 of the cell was connected to a positive electrode liquid feed pump (not shown) via a Teflon (registered trademark) tube (an inner diameter of 5 mm and a length of 20 cm), and a suction side of the liquid feed pump was connected to a positive electrode liquid tank (not shown). An outlet nozzle 8 was connected to the positive electrode liquid tank via a Teflon (registered trademark) tube (an inner diameter of 5 mm and a length of 200 cm) such that a positive electrode electrolyte is returned to the positive electrode liquid tank from the outlet nozzle 8 of the positive electrode chamber 3 of the cell. An inlet nozzle 14 of a negative electrode chamber 11 was connected to a negative electrode liquid feed pump by using a similar tube on the negative electrode side, and a suction side of the liquid feed pump was connected to a negative electrode liquid tank. An outlet nozzle 15 was connected to the negative electrode liquid tank via a Teflon (registered trademark) tube such that a negative electrode electrolyte is returned to the negative electrode liquid tank from the outlet nozzle 15 of the negative electrode chamber 11. Furthermore, a pressure sensor was inserted into an opening of the inlet nozzle 7 from a gasket 16 of a positive electrode liquid inflow gutter 4 portion, and a pressure sensor was inserted into an opening of the inlet nozzle 14 from the gasket 16 of a negative electrode liquid inflow gutter 12 portion. As all of the pumps, volute pumps were used.

A Nafion (registered trademark) 212 membrane was used as the membrane 6.

Seven carbon felts (sheet form) were overlapped to fill each of the positive electrode chamber 3 and the negative electrode chamber 11, and were used as a positive electrode and a negative electrode. A shape of each electrode chamber has a horizontal width of 3 cm, a height of 15 cm, and a thickness of 0.2 cm, and the electrode chamber has a structure in which a liquid enters to a lower part (the inlet nozzles 7 and 14 sides), and the liquid comes out from an upper part (the outlet nozzle 8 and 15 sides).

A carbon rolled plate was used as each of a collector plate 17 on the positive electrode side and a collector plate 18 on the negative electrode.

(Operation and evaluation)

As a positive electrode electrolyte, a sulfuric acid aqueous solution of 4.5 mol/L containing a tetravalent vanadium ion of 1.8 mol/L was used. As a negative electrode electrolyte, a sulfuric acid aqueous solution of 4.5 mol/L containing a trivalent vanadium ion of 1.8 mol/L was used. Each electrolyte amount was 200 mL.

First, the positive electrode electrolyte and the negative electrode electrolyte were respectively supplied to and circulated at an amount of 50 mL/minute in the positive electrode chamber 3 and the negative electrode chamber 11 of the battery.

Charge was performed at a current density of 100 mA/cm$^2$ while circulating the positive electrode electrolyte and the negative electrode electrolyte as mentioned above. The charge was stopped when a voltage reached 1.75 V, discharge was subsequently performed at 100 mA/cm$^2$, and the discharge was stopped when a voltage reached 1.0 V.

Generally, in a case where dust, an air bubble or the like is accumulated in an electrode, an effective area thereof is decreased, and thus internal resistance is increased such that power efficiency is reduced. Thus, charge and discharge were repeated, and a power efficiency in the 10th cycle was obtained.

In the present Comparative Example and each Example which will be described later, the power efficiency was calculated according to the following equation.

$$\text{Power efficiency (\%)} = \{\text{discharge voltage (V)} \times \text{discharge current (A)} \times$$

$$\text{discharge time (h)}\} / \{\text{charge voltage (V)} \times \text{charge current (A)} \times \text{charge time (h)}\} \times 100$$

Subsequently, a current density for charge and discharge was increased to 600 mA/cm$^2$ from the 11th cycle, the amount of the circulated electrolytes was increased to 300 mL/minute, and the test was performed up to the 100th cycle.

In this case, power efficiencies in the 20th cycle and the 100th cycle were measured.

Results of measuring power efficiencies are shown in Table 1.

[Example 1]

The test was performed in the same manner as in Comparative Example 1 except for the following contents.

A plunger pump was used instead of the volute pump. The cell used in Comparative Example 1 was a cell which can be used without hindrance under the flow rate of 400 mL/minte, and thus a positive electrode electrolyte and a negative electrode electrolyte were respectively supplied to the positive electrode chamber 3 and the negative electrode chamber 11 simultaneously as follows.

1) Up to the 10th cycle, the electrolytes were supplied at a flow rate of 400 mL/minute for one second, and then were not supplied for seven seconds, and this was repeatedly performed such that the electrolytes were supplied at an average flow rate of 50 mL/minute.
2) In the 11th cycle and the subsequent cycles, the electrolytes were supplied at a flow rate of 400 mL/minute for three seconds, and then were not supplied for one second, and this was repeatedly performed such that the electrolytes were supplied at an average flow rate of 300 mL/minute.

Results of measuring power efficiencies are shown in Table 1.

[Example 2]

The test was performed in the same manner as in Example 1 except for the following contents.

A positive electrode electrolyte and a negative electrode electrolyte were respectively supplied to the positive electrode chamber 3 and the negative electrode chamber 11 simultaneously as follows.

1) Up to the 10th cycle, the electrolytes were supplied at a flow rate of 55 mL/minute for 0.2 seconds, and then supplied at a flow rate of 45 mL/minute for 0.2 seconds, and this was repeatedly performed such that the electrolytes were supplied at an average flow rate of 50 mL/minute.
2) In the 11th cycle and the subsequent cycles, the electrolytes were supplied at a flow rate of 330 mL/minute for 0.5 seconds, and then supplied at a flow rate of 270 mL/minute for 0.5 seconds, and this was repeatedly performed such that the electrolytes were supplied at an average flow rate of 300 mL/minute.

Results of measuring power efficiencies are shown in Table 1.

Table 1

| | Power efficiency (%) | | |
|---|---|---|---|
| | 10th cycle | 20th cycle | 100th cycle |
| Comparative Example 1 | 86 | 68 | 8 |
| Example 1 | 87 | 73 | 41 |
| Example 2 | 86 | 70 | 32 |

It can be seen in each Example that a reduction in a power efficiency is smaller even in the 100th cycle than in the Comparative Example.

Industrial Applicability

The present invention provides a method for operating a redox flow battery, capable of operating the redox flow battery for a long period of time.

Reference Signs List

3: POSITIVE ELECTRODE CHAMBER

4: POSITIVE ELECTRODE LIQUID INFLOW GUTTER

5: POSITIVE ELECTRODE LIQUID OUTFLOW GUTTER

6: MEMBRANE

7: POSITIVE ELECTRODE LIQUID INLET NOZZLE

8: POSITIVE ELECTRODE LIQUID OUTLET NOZZLE

11: NEGATIVE ELECTRODE CHAMBER

12: NEGATIVE ELECTRODE LIQUID INFLOW GUTTER

13: NEGATIVE ELECTRODE LIQUID OUTFLOW GUTTER

14: NEGATIVE ELECTRODE LIQUID INLET NOZZLE

15: NEGATIVE ELECTRODE LIQUID OUTLET NOZZLE

16: GASKET

17: POSITIVE ELECTRODE COLLECTOR PLATE

18: NEGATIVE ELECTRODE COLLECTOR PLATE

**Claims**

1.  A method of operating a redox flow battery which has a positive electrode, a negative electrode and a membrane, and performs charge and discharge by supplying a positive electrode electrolyte to the positive electrode and supplying a negative electrode electrolyte to the negative electrode, the method comprising:
    a step of supplying the electrolytes such that one or both of a flow rate of the positive electrode electrolyte and a flow rate of the negative electrode electrolyte is changed in a cycle of 1/60 to 10 seconds.

**2.** The method of operating a redox flow battery according to claim 1,
wherein an amplitude of the change of the flow rate is equal to or more than 10% of an average flow rate of the supplied electrolyte.

**3.** The method for operating a redox flow battery according to claim 1 or 2,
wherein both of the flow rate of the positive electrode electrolyte and the flow rate of the negative electrode electrolyte are changed.

**4.** The method of operating a redox flow battery according to claim 3,
wherein the change of the flow rates of the two electrolytes are synchronized with each other.

**5.** The method of operating a redox flow battery according to any one of claims 1 to 4,
wherein the step of supplying the electrolytes has

a sub-step of supplying the electrolyte, and
a sub-step of not supplying the electrolyte.

**6.** The method of operating a redox flow battery according to any one of claims 1 to 5,
wherein the step of supplying the electrolytes has

a sub-step of supplying the electrolyte, and
a sub-step of supplying the electrolyte at a flow rate which is smaller than that of the above sub step.

FIG. 1

## INTERNATIONAL SEARCH REPORT

| International application No. |
|---|
| PCT/JP2017/045442 |

| A. CLASSIFICATION OF SUBJECT MATTER |
|---|
| Int.Cl. H01M8/18(2006.01)i, H01M8/04746(2016.01)i |
| According to International Patent Classification (IPC) or to both national classification and IPC |

| B. FIELDS SEARCHED |
|---|

Minimum documentation searched (classification system followed by classification symbols)
Int.Cl. H01M8/18, H01M8/04746

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2016-146306 A (SUMITOMO ELECTRIC INDUSTRIES, LTD.) 12 August 2016 & US 2017/0033391 A1 & WO 2016/129386 A1 & CN 106165177 A & TW 201637271 A | 1–6 |
| A | JP 2015-225820 A (SUMITOMO ELECTRIC INDUSTRIES, LTD.) 14 December 2015 & US 2017/0200965 A1 & WO 2015/182364 A1 & EP 3151324 A1 & TW 201603385 A & CN 106463753 A | 1–6 |
| A | JP 2009-016219 A (SUMITOMO ELECTRIC INDUSTRIES, LTD.) 22 January 2009 (Family: none) | 1–6 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 January 2018 (26.01.2018) | 13 February 2018 (13.02.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

9

**REFERENCES CITED IN THE DESCRIPTION**

**Patent documents cited in the description**

- JP 2016245563 A

- JP H10308232 B